Europäisches Patentamt

European Patent Office

Office européen des brevets

(11) Publication number: **0 181 645**
**B1**

(12) **EUROPEAN PATENT SPECIFICATION**

(45) Date of publication of patent specification: **23.01.91**

(21) Application number: **85114542.5**

(22) Date of filing: **15.11.85**

(51) Int. Cl.⁵: **F 02 B 23/06**

(54) Combustion chamber structure in an internal combustion engine.

(30) Priority: **15.11.84 JP 241535/84**

(43) Date of publication of application:
**21.05.86 Bulletin 86/21**

(45) Publication of the grant of the patent:
**23.01.91 Bulletin 91/04**

(84) Designated Contracting States:
**DE GB**

(56) References cited:
**CH-A- 335 297**
**DE-A-3 214 096**
**GB-A-1 076 317**
**GB-A-1 172 455**

(73) Proprietor: **KABUSHIKI KAISHA TOYOTA CHUO KENKYUSHO**
**41-1, Aza Yokomichi Oaza Nagakute Nagakute-cho**
**Aichi-gun Aichi-ken, 480-11 (JP)**

(72) Inventor: **Aoyama, Taro**
**2056, Aza Ebiyama Oaza Shimada Tempaku-cho**
**Tempaku-ku Nagoya-shi Aichi (JP)**
Inventor: **Sunami, Kiyokazu**
**7-37-2, Wakinoshima-cho**
**Tajimi-shi Gifu (JP)**
Inventor: **Mizuta, Junichi**
**8-26, Shoei-cho 3-chome**
**Kariya-shi Aichi (JP)**

(74) Representative: **Diehl, Hermann O. Th., Dr. et al**
**Diehl & Partner Flüggenstrasse 13**
**D-8000 München 19 (DE)**

Courier Press, Leamington Spa, England.

## Description

This invention relates to a combustion chamber structure in a direct injection type internal combustion engine according to the preamble of the main claim. Engines of this type are disclosed in GB—A 1 172 455, DE—A 32 14 096 and CH—A 335 297.

In such an engine, as a rule, a substantially spherical cavity is formed in an upper surface of each piston. The opening of the cavity is made smaller in area than the bottom of the cavity, to increase the speed of a swirl stream therein, and to positively utilize a squishing action to improve combustion efficiency.

In such a combustion chamber structure, in order to increase the degree of utilization of the air at the periphery of the cavity while using an injection valve, such as a pintle valve, outwardly-opening valve or swirl valve, which sprays widely, it is preferable that the cavity opening be reduced in area, and that the injection position be as far from the cavity center as possible but not so far that the spray strikes the wall of the cavity. For this purpose, the cavity opening has a spray relief.

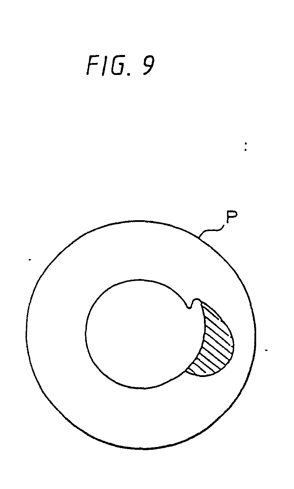

If the engine is disassembled after a certain period of operation, then (as shown in Figure 9) high-temperature-gas strike marks can be observed on a shaded portion of the upper surface of the piston P, which is located downstream of the injection position in the direction of the swirl stream in the cylinder and on a lower part of the cylinder head (not shown) which faces this shaded portion, while accumulated soot can be observed on other parts. That is, the partly-burned gas leaks into the narrow piston top clearance relatively early during combustion, and is cooled so as to form a soot cloud. Combustion ceases in the space above the piston, and accordingly the air utilization factor in that space is low.

Accordingly, in a direct injection type diesel engine, the space above the piston should be made small in order to maximize the cavity volume and the compression ratio; however, machining accuracy limits the amount that this space may be reduced. If, however, in a direct injection type internal combustion engine, this space is decreased in size, the exhaust valve and the piston may interfere with each other, so that valve stamping may occur during operation.

In an engine of the type here in question, it can further happen that the fuel spray from a fuel injection nozzle is caused to strike against the wall of the combustion chamber thereby to form a fuel film on the wall, or that, in an engine in which the cavity opening is not reduced in area, the unburned or partly-burned gas leaks onto the upper surface of the piston and is cooled there, so that the combustion is stopped, thus forming soot and hydrocarbons.

In view of the foregoing, an object of this invention is to provide a combustion chamber structure in an internal combustion engine in which combustion of unburned or partially-burned gas which leaks out to the cavity in the upper surface of the piston is positively accelerated, thereby reducing the amount of soot and hydrocarbons in the exhaust gas, improving combustion efficiency, and providing high power.

This object is solved by the combustion chamber structure according to the main claim according to which a leaked-gas guide channel is formed in the surface of the head of the exhaust valve.

Further advantageous features of the combustion chamber structure are evident from the subclaims. The invention is especially useful for direct injection type internal combustion engines using single-hole type injection nozzles.

The provision of a leaked-gas guide channel in this manner enables the thermal retention of the unburned or partly-burned gas which leaks out of the cavity, thus improving the air utilization factor of the piston top clearance to allow the exhaust gas to burn completely. Thus, combustion efficiency is increased, and the amount of exhaust gas is decreased.

The invention will be described below in detail with reference to the accompanying drawings, in which:

Fig. 1 is a diagram of a combustion chamber in an internal combustion engine, as viewed along an axis of the piston, according to the invention;

Fig. 2 is a perspective view, with parts cut away, showing the positional relationship between the upper surface of the piston and an exhaust valve;

Fig. 3 is a perspective view of the exhaust valve as viewed from below;

Figs. 4 and 5 are a sectional view and a bottom view, respectively, showing the exhaust valve and its relevant components;

Fig. 6 is a plan view, as viewed along an axis of the piston, showing the relationship between the exhaust valve and the cavity of an engine;

Figs. 7 and 8 are plan views, corresponding to that in Fig. 6, showing the relationships between the exhaust valves and the cavities of other engines; and

Fig. 9 is a diagram, as viewed along an axis of the piston, showing soot stuck to a conventional engine.

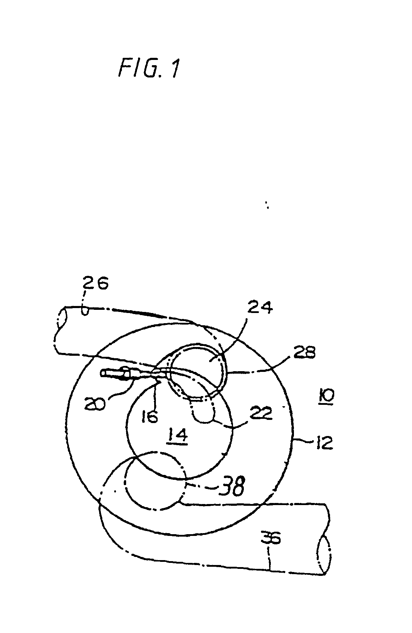

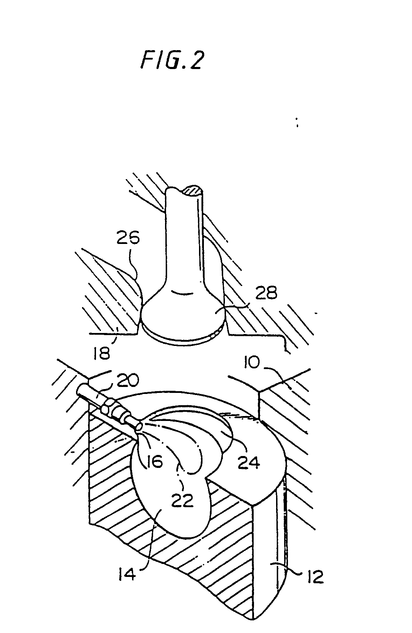

In accordance with Figs. 1 and 2 a generally spherical cavity 14 is formed in the upper surface of a piston 12 which is moved up and down within a cylinder block 10. The cavity 14 has a spray relief 16 which partially increases the opening area of the cavity 14 as viewed along an axis of the piston 12, and is faced by a fuel injection valve 20 which is secured to a cylinder head 18. The fuel injection valve 20 is so designed that it can spray fuel 22 from its single injection hole through the spray relief 16 into the cavity 14 in such a manner that the fuel spray goes along the swirl stream in the cavity 14.

In the upper surface of the piston 12, a recess 24 is formed adjacent to the cavity 14, thus providing an auxiliary combustion chamber.

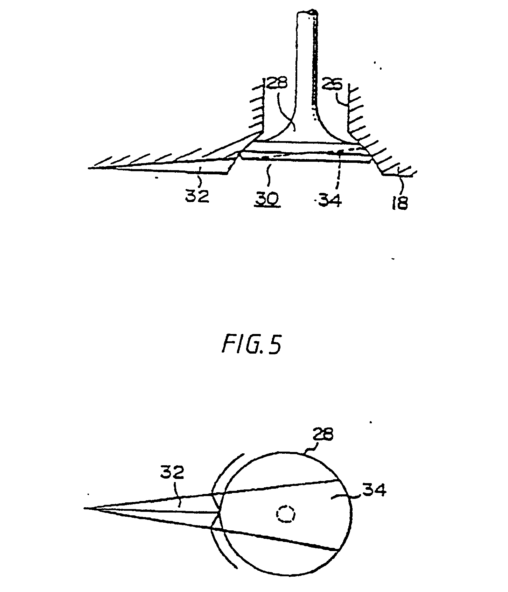

As shown in Fig. 4, an exhaust valve 28 for opening and closing an exhaust port 26 in an exhaust system is provided in the cylinder head 18, in such a manner that it is shifted in the direction of enlargement of the combustion chamber (upwardly in Fig. 4) rather than towards the lower surface of the cylinder head 18 thus forming an auxiliary combustion chamber 30 in a manner similar to the recess 24. The auxiliary combustion chamber 30 has a cut 32 which is wider towards the exhaust valve 28 from the cavity 14, and is used for guiding leaked gas.

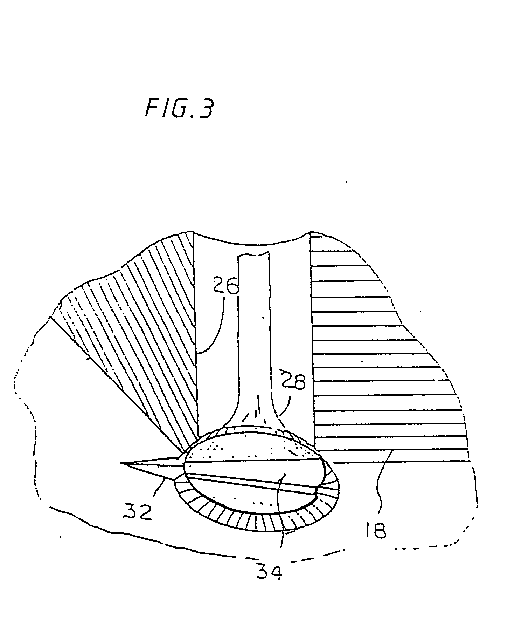

As shown in Figs. 3 and 5, a cut 34 is formed in the bottom surface of the exhaust valve 28 in such a manner that the cut 34 is aligned with the aforementioned cut 32 while its width and depth are gradually increased, from the side adjacent to the cut 32 towards its other end.

As is apparent from Fig. 1, the exhaust valve 28 is disposed in such a manner that it partially overlaps the cavity 14 as viewed along an axis of the piston 12.

The exhaust valve 28 also overlies the recess 24 forming the one auxiliary combustion chamber provided on one side of the cavity 14 such that on the opposite side of the recess 24 the exhaust valve is provided. The intake valve 38 is adapted to open and close the intake port 36 which is a part of the suction system and forms the swirling air stream in the combustion chamber.

During engine operation, whenever the piston 12 is moved upwardly, the fuel injection valve 20 jets fuel 22 into the cavity 14. At the same time, the air is compressed and the gas temperature in the combustion chamber is increased, as a result of which the fuel 22 thus jetted is ignited, combusted, and exploded. When the piston 12 is moved downwardly during combustion, burned and unburned gas begins to leak onto the upper surface of the piston from the cavity 14.

The exhaust valve 28 is located near the cavity 14, so that the gas streaming from the cavity 14 to the exhaust valve 28 is maintained hot by the high temperature exhaust valve 28 and its atmospheric temperature. Therefore, combustion is complete, and the unburned gas, having its combustion accelerated, is discharged through the exhaust port 26. Combustion is further accelerated by means of the recess 24 and the auxiliary chamber 30.

When the unburned or partly-burned fuel which leaks from the cavity 14 onto the upper surface of the piston 12 relatively early during combustion in the combustion chamber comes near the exhaust valve 28 at high temperature, combustion is accelerated, in order to achieve complete combustion. In other words, the air on the upper surface of the piston 12 is fully utilized. This eliminates the need for the conventional means for improving the air utilization factor, and the conventional method for increasing the volume ratio of the cavity 14 and decreasing the space between the top surface of the piston 12 and the lower surface of the cylinder head 18. Therefore, the amounts of soot and hydrocarbons (HC) which are created and discharged when the leaked gas is cooled or unburned in the clearance of the piston are decreased, so that power and fuel economy are enhanced.

Furthermore, combustion efficiency is improved, and valve stamping by the exhaust valve 28 or the piston 12 is prevented, so that the space may be provided with a lower accuracy. Therefore, assembly is easier, and the machining cost is relatively low. If the space is the same as in the conventional structure, then the volume ratio of the piston 12 can be large, the air utilization factor is increased, and the combustion in the top clearance is carried out mainly in the auxiliary combustion chamber 30 and collectively in the recess 24. Therefore, oxygen is supplied to the recess 24 and the auxiliary combustion chamber 30 with the aid of the swirl stream therein, and the air utilization factor is further increased. In this case, the compression ratio is scarcely decreased, so that the starting characteristic is maintained substantially unchanged, and engine performance is scarcely lowered during warm-up.

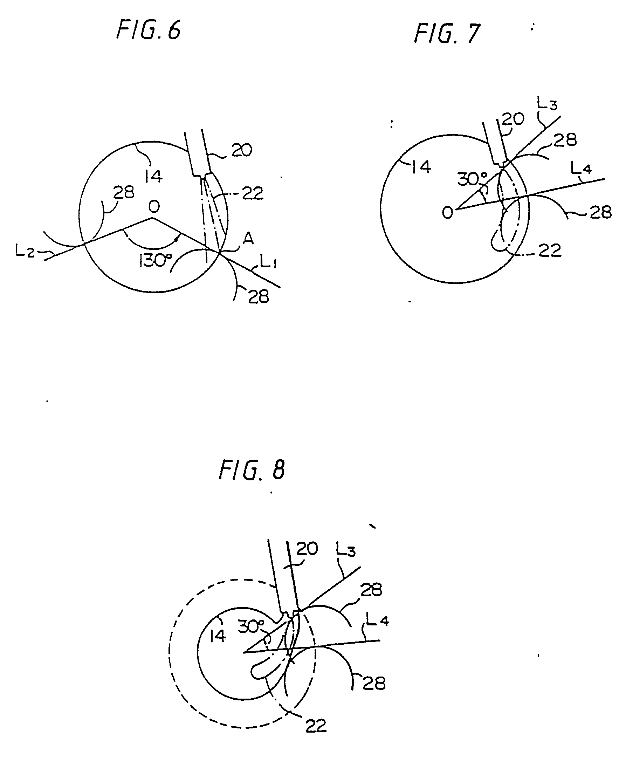

In Fig. 6, reference character $A$ designates a point where the fuel 22 strikes the wall of the cavity 14; $L_1$, a line connecting the center O of the cavity 14 and the point $A$ as viewed along an axis of the piston 12; and $L_2$, a line extending radially from the cavity center O in such a manner that the line $L_2$ is downstream of the swirl stream and forms an angle of 130° with the line $L_1$. In an engine in which as shown in Fig. 6, the cavity 14 has no recess 16, and the fuel 22 from the fuel injection valve 20 strikes the wall of the cavity 14, it is preferable that, when the rated speed is about 4,000 rpm, the exhaust valve be positioned in a range of about 130° from the position ·where the exhaust valve contacts the line $L_1$ from the downstream side of the swirl stream, which extends, as shown in the Figure, to the position where the exhaust valve contacts the line $L_2$ from the downstream side of the swirl stream.

In an engine in which as shown in Fig. 7, the cavity 14 has no recess 16, and the fuel 22 from the fuel injection valve 20 does not strike the wall of the cavity 14, it is desirable that the exhaust valve 28 is positioned in a range of about 30° from the position where the exhaust valve contacts a line $L_3$ from the downstream side of the swirl stream, which extends, as shown in the Figure, to the position where the exhaust valve contacts a line $L_4$ from the downstream side of the swirl stream. The line $L_3$ connects the center O of the cavity 14 and the fuel injection hole of the fuel injection valve 20. The line $L_4$ is extended from the center O of the cavity 14 and forms an angle of 30° with the line $L_3$.

In an engine such as shown in Fig. 8, the cavity 14 has a recess 16, and the fuel 22 from the fuel injection valve 20 does not strike the wall of the cavity 14, similarly as in the case of the above-described engine, it is desirable that the exhaust valve is positioned in a range of about 30° downstream of the fuel injection hole of the fuel injection valve 20.

## Claims

1. A combustion chamber structure in a direct injection type internal combustion engine, comprising

a cylinder block (10) having a cylinder chamber formed therein;

a cylinder head (18) mounted on the cylinder block (10);

a piston (12) which reciprocates within said cylinder chamber and forms a combustion chamber between an upper surface of said piston (12) and a lower surface of said cylinder head (18);

said upper surface of said piston (12) having a substantially spherical cavity (14) formed therein;

intake means (36) including an intake valve (38) provided in said cylinder head (18) for forming an intake air swirl stream in said combustion chamber;

exhaust means (26, 28) provided in said cylinder head (18) including a hot exhaust valve (28) and

an injection nozzle (20) mounted on said cylinder head (18) to spray fuel along the swirl stream in said cavity (14);

said exhaust valve being in juxtaposition to and partially overlapping said spherical cavity (14) and arranged in a predefined range of angles around the centeraxis;

said injection nozzle (20), said exhaust valve (28) and said intake valve (38) being arranged in that order along the normal flow direction of said swirl stream, characterized in that

a leaked-gas guide channel (34) is formed in the surface of the head of the exhaust valve.

2. A combustion chamber structure as in claim 1, wherein the guide channel (34) extends into the cylinder head (18), and increases in diameter along its length in direction to the valve.

3. A combustion chamber structure as in one of the claims 1 or 2, wherein a recess (24) is formed in said upper surface of said piston (12) adjacent to said cavity (14) so as to face said exhaust valve (28), said recess (24) forming an auxiliary combustion chamber.

4. A combustion chamber structure as in one of the claims 1 to 3, wherein a spray recess (16) to avoid fuel wall-wetting is provided between said cavity (14) and said injection nozzle (20) and upstream of said recess (24) in the direction of the swirl stream therein.

5. A combustion chamber structure as in one of the claims 1 to 4 wherein said injection nozzle (20) is of a type which sprays fuel against a wall of said cavity.

6. A combustion chamber structure as in claim 3, wherein said exhaust valve (28) is positioned within 130° from a point (A) where the fuel strikes the wall of said cavity downstream of said injection nozzle (20) in the direction of said swirl stream.

7. A combustion chamber structure as in one of the claims 1 to 4, wherein said injection nozzle (20) is of a type which sprays fuel in a manner not to impinge on a wall of said cavity (Fig. 7, 8).

8. A combustion chamber structure as in claim 7, wherein said exhaust valve (28) is positioned within 30° from a hole of said injection nozzle (20) downstream thereof in the direction of said swirl stream.

## Patentansprüche

1. Brennkammer für eine direkt einspritzende Brennkraftmaschine, mit:

einem Zylinderblock (10), in dem eine Zylinderkammer ausgebildet ist;

einem in dem Zylinderblock (10) angeordneten Zylinderkopf (18);

einem Kolben (12), der sich in der besagten Zylinderkammer hin- und herbewegt und zwischen einer oberen Fläche des besagten Kolbens (12) und einer unteren Fläche des besagten Zylinderkopfes (18) eine Brennkammer bildet;

wobei in der besagten oberen Fläche des Kolbens (12) ein im wesentlichen sphärischer Hohlraum (14) ausgebildet ist;

Einlaßmittel (36), welche ein in dem besagten Zylinderkopf (18) angeordnetes Einlaßventil (38) umfassen, um eine Einlaß-Wirbelluftströmung in der besagten Brennkammer zu erzeugen;

in dem besagten Zylinderkopf (18) angeordnete Auslaßmittel (26, 28), welche ein heißes Auslaßventil (28) umfassen und

eine Einspritzdüse (20), die an dem besagten Zylinderkopf (18) angeordnet ist, um Brennstoff entlang der Wirbelströmung in dem besagten Hohlraum (14) einzuspritzen;

wobei das besagte Auslaßventil dem sphärischen Hohlraum (14) gegenübersteht und ihn teilweise überlappt und in einem bestimmten Winkelbereich um die Mittelachse angeordnet ist;

wobei die besagte Einspritzdüse (20, das besagte Auslaßventil (28) und das besagte Einlaßventil (38) in dieser Reihenfolge entlang der normalen Strömungsrichtung des besagten Wirbelstromes angeordnet sind, dadurch gekennzeichent, daß

in der Oberfläche des Ventilkopfes des Auslaßventiles ein Leckgas-Führungskanal (34) ausgebildet ist.

2. Brennkammer nach Anspruch 1, dadurch gekennzeichnet, daß sich der Führungskanal (34) in den Zylinderkopf (18) erstreckt und daß sich sein Durchmesser entlang seiner Längsausdehnung in Richtung auf das Ventil vergrößert.

3. Brennkammer nach Anspruch 1 oder 2, dadurch gekennzeichnet, daß in der besagten oberen Fläche des Kolbens (12) in der Nähe des besagten Hohlraumes (14) eine Ausnehmung (24) so ausgebildet ist, daß sie dem besagten Auslaßventil (28) zugewandt ist, wobei diese Ausnehmung (24) eine Hilfsbrennkammer bildet.

4. Brennkammer nach einem der Ansprüche 1 bis 3, dadurch gekennzeichnet, daß eine Strahlausnehmung (16) zur Verhinderung einer Wandbenetzung durch den Brennstoffstrahl zwischen dem besagten Hohlraum (14) und der besagten Einspritzdüse (20) und in Richtung des darin herrschenden Wirbelstroms stromaufwärts von der besagten Ausnehmung (24) angeordnet ist.

5. Brennkammer nach einem der Ansprüche 1 bis 4, dadurch gekennzeichnet, daß die besagte Einspritzdüse (20) von der Art ist, welche Brennstoff gegen eine Wand des besagten Hohlraumes spritzt.

6. Brennkammer nach Anspruch 3, dadurch gekennzeichnet, daß das besagte Auslaßventil (28) innerhalb von 130° von einem Punkt (A) angeordnet ist, an welchem der Brennstoff die Wand des besagten Hohlraumes in Richtung des besagten Wirbelstromes stromabwärts von der besagten Einspritzdüse (20) trifft.

7. Brennkammer nach einem der Ansprüche 1 bis 4, dadurch gekennzeichnet, daß die besagte Einspritzdüse (20) von der Art ist, welche den Brennstoff in der Weise einspritzt, daß er nicht auf eine Wand des besagten Hohlraumes auftrifft (Fig. 7, 8).

8. Brennkammer nach Anspruch 7, dadurch gekennzeichnet, daß das Auslaßventil (28) innerhalb von 30° von einem Loch der besagten Einspritzdüse (20) entfernt stromabwärts davon in der Richtung des besagten Wirbelstromes angeordnet ist.

## Revendications

1. Structure de chambre de combustion dans un moteur à combustion interne du type à injection directe, comprenant:
un bloc de cylindre (10) dans lequel est formée une chambre de cylindre;
une culasse (18) montée sur ledit bloc de cylindre (10);
un piston (12) ayant un mouvement alternatif à l'intérieur de ladite chambre de cylindre et qui forme une chambre de combusion entre une surface supérieure dudit piston (12) et une surface inférieure de ladite culasse (18);
ladite surface supérieure dudit piston (12) ayant une cavité (14) sensiblement sphérique ménagée dans ladite surface;
des moyens d'admission (36) comprenant une soupape d'admission (38) prévue dans ladite culasse (18) pour former un courant tourbillonnant d'air d'admission dans ladite chambre de combustion;
des moyens d'échappement (26, 28) prévus dans ladite culasse (18) et comprenant une soupape d'échappement des gaz chauds (28); et
un gicleur d'injection (20) monté sur ladite culasse (18) pour nébuliser du carburant le long dudit courant tourbillonnant dans ladite cavité (14);
ladite soupape d'échappement étant juxtaposée à ladite cavité sphérique (14) et la chevauchant partiellement et étant disposée dans une gamme prédéterminée d'angles autour de l'axe central;
ledit gicleur d'injection (20), ladite soupape d'échappement (28) et ladite soupape d'admission (38) étant disposés dans cet ordre le long de la direction d'écoulement normal dudit courant tourbillonnant, caractérisée en ce que
un canal (34) de guidage de gaz fuyards est formé dans la surface de la tête de la soupape d'échappement.

2. Structure de chambre de combustion selon la revendication 1, dans laquelle le canal (34) de guidage se prolonge jusque dans la culasse (18) et augmente en diamètre le long de sa longueur en direction de la soupape.

3. Structure de chambre de combustion selon l'une des revendications 1 ou 2, dans laquelle un retrait (24) est formé dans ladite surface supérieure dudit piston (12) au voisinage de ladite cavité (14) de façon à faire face à ladite soupape d'échappement (28), ledit retrait (24) formant une chambre de combusion auxiliaire.

4. Structure de chambre de combustion selon l'une quelconque des revendications 1 à 3, dans laquelle il est prévu, entre ladite cavité (14) et ledit gicleur d'injection (20) en amont dudit retrait (24) dans la direction du courant tourbillonnant qui s'y fait, un retrait de nébulisation (16) pour éviter que le carburant ne mouille les parois.

5. Structure de chambre de combustion selon l'une quelconque des revendications 1 à 4, dans laquelle ledit gicleur d'injection (20) est du type qui nébulise le carburant à l'encontre d'une paroi de ladite cavité.

6. Structure de chambre de combustion selon la revendication 3, dans laquelle ladite soupape d'échappement (28) est disposée à l'intérieur d'un angle de 130° à partir d'un point (A) où le carburant heurte la paroi de ladite cavité en aval dudit gicleur d'injection (20) dans la direction dudit courant tourbillonnant.

7. Structure de chambre de combustion selon l'une quelconque des revendications 1 à 4, dans laquelle ledit gicleur d'injection (20) est du type qui nébulise le carburant de façon qu'il ne vienne pas heurter une paroi de ladite cavité (Fig. 7, 8).

8. Structure de chambre de combustion selon la revendication 7, dans laquelle ladite soupape d'échappement (28) est disposée à l'intérieur d'un angle de 30° à partir d'un trou dudit gicleur d'injection (20) en aval de ce dernier dans la direction du courant tourbillonnant.

FIG. 1

FIG.2

FIG.3

*FIG.5*

FIG. 6

FIG. 7

FIG. 8

FIG. 9